# FASCICULE DE BREVET EUROPEEN

(11) **EP 0 605 781 B1**
(45) Date de publication et mention de la délivrance du brevet: **16.07.1997**
(21) Numéro de dépôt: 93118736.3
(22) Date de dépôt: 22.11.1993
(51) Int. Cl.: B29B 7/42, B29B 7/60

(54) **Procédé et appareil de melangeage en continu de caoutchouc**
Verfahren und Apparat zum kontinuierlichen Mischen von Kautschuk
Method and apparatus for continuously mixing rubber

(30) Priorité: 07.12.1992 FR 9214890
(43) Date de publication de la demande: 13.07.1994
(73) Titulaire: SEDEPRO, F-75015 Paris (FR)
(72) Inventeur: Deal, Michel, F-03110 St-Remy-en-Rollat (FR); Laurent, Daniel, F-38240 Meylan (FR)
(74) Mandataire: Bauvir, Jacques

(56) Documents cités:
- EP-A- 0 490 056
- GB-A- 974 822
- US-A- 2 733 051
- US-A- 2 847 196

## Description

La présente invention se rapporte au mélangeage des caoutchoucs, plus précisément au mélangeage en continu des caoutchoucs.

Dans l'industrie du caoutchouc, la technique à l'heure actuelle encore très largement répandue pour le mélangeage fait appel à l'utilisation de mélangeurs internes. Cette technique est fondamentalement discontinue : pour réaliser une quantité donnée d'une composition de caoutchouc, on procède d'abord à la pesée des différents constituants devant constituer cette composition, puis on introduit ces constituants ou au moins certains d'entre eux dans un mélangeur interne, lequel assure la dispersion et le travail mécanique nécessaires pour rendre aussi homogène que possible le mélange final obtenu. La réalisation d'une composition, parfois appelée aussi un mélange, peut nécessiter plusieurs passages successifs dans un mélangeur interne ou dans des mélangeurs internes différents, et peut faire appel également à des mélangeurs à cylindres.

Toutes les opérations évoquées ci-dessus sont autant d'opérations indépendantes. Le travail en continu, s'il existe, n'intervient qu'à un stade ultérieur de la fabrication, au moment de l'extrusion de produits semi-finis, comme par exemple une bande de roulement, ou un flanc, ou un bourrage à placer sur une tringle.

La substitution aux procédés discontinus d'un procédé continu a fait l'objet d'importantes recherches et reste un objectif permanent depuis très longtemps pour les industries de transformation, tant les inconvénients des systèmes discontinus sont importants. Malgré cela, en ce qui concerne la préparation de compositions de caoutchouc, aucun procédé satisfaisant n'a été proposé à ce jour. Une composition de caoutchouc est considérée comme préparée si elle comporte tous les constituants prévus, y compris le système de vulcanisation, et si la masse de coutchouc obtenue peut être utilisée directement dans une étape d'extrusion, ou de moulage, suivie d'une étape de vulcanisation.

L'échec des procédés de préparation en continu semble dû au fait que le mélangeage du caoutchouc est beaucoup plus difficile que le mélangeage d'autres matières, comme les matières plastiques. Les propriétés de la composition finale dépendent en effet non seulement des constituants contenus dans une composition, mais également de la façon dont on a effectué le mélangeage, c'est-à-dire dépendent aussi du travail mécanique apporté pendant que s'opére le mélangeage.

Des procédés de mélangeage en continu déjà connus font en général appel à l'effet mélangeur des vis de boudineuse. De nombreuses variantes de boudineuses à vis ont été proposées : boudineuses à une vis, boudineuses à plusieurs vis en parallèle ou non, ainsi que de nombreuses variantes de vis pour lesquels une multitude de formes ont été étudiées dans l'objectif de procurer un bon effet de mélangeage et/ou un travail mécanique suffisant.

On sait que, pour un mélange de caoutchouc, le dosage des différents constituants de base doit être très précis. Ce dosage précis ne pose pas de difficulté particulière lorsque l'on procède par charges successives, c'est-à-dire pour les procédés discontinus. Par contre, lorsqu'il s'agit de proposer un mélangeage en continu, il est indispensable de pouvoir réaliser le dosage nécessaire des différents ingrédients en continu. En outre, dans le cas de produits pulvérulents, à la difficulté de dosage s'ajoute la difficulté de transport des produits, notamment en aval du dosage.

Généralement, des unités doseuses déposent les ingrédients nécessaires, à intervalles réguliers sur un convoyeur à bandes qui alimente une ou les unités mélangeuses proprement dites. Une tentative récente de rendre continu le mélangeage du caoutchouc est décrite dans un article publié dans la revue "European Rubber Journal" de mars 1987, intitulé "A tale of Continuous Development".

Ce procédé de mélangeage en continu, déjà proposé dans l'état de la technique, réalise les dosages de constituants par pesées, puis effectue l'introduction de différents constituants dans des appareils effectuant un prémélangeage, et ceci à différents endroits dans la chaîne de mélangeage. Cela impose donc d'installer de nombreux appareils séparés réalisant chacun une fonction bien précise : pesée, convoyage, pré-mélangeage. Ce n'est qu'ensuite que l'on peut introduire les différents constituants par gravité dans des puits d'alimentation, par exemple dans un appareil mélangeur du genre de celui décrit dans la demande de brevet EP 0 490 056.

Aucun procédé de mélangeage en continu proposé dans l'état de la technique n'a réussi à s'imposer dans l'industrie du caoutchouc. Les causes en sont une action de mélangeage insuffisante de par la difficulté de mélanger les caoutchoucs en utilisant la technique des mélangeurs à vis, et une extrêmement grande complexité du dosage des constituants lorsqu'il faut le réaliser en continu. En bref, les procédés de préparation en continu n'ont encore jamais permis d'atteindre les propriétés que l'on attend du mélange final, voire même sont incapables de respecter de façon suffisamment précise la formule de la composition de caoutchouc.

On sait que, pour obtenir un bon mélangeage, il est nécessaire de provoquer des mouvements désordonnés des constituants, c'est-à-dire de provoquer un certain chaos. Lorsque ce mélangeur est du type continu comme par exemple celui du brevet EP 0 490 056 précité, il faut encore que le débit local soit sensiblement constant à l'intérieur du mélangeur. Cela signifie que plus on cherche à optimiser l'action du mélangeage, plus il risque d'apparaître des instabilités de débit, incompatibles avec un respect rigoureux des proportions des différents constituants.

L'objectif de la présente invention est de parvenir à réaliser en continu un dosage des constituants de base intervenant dans n'importe quel type de composition de caoutchouc, puis un mélangeage complet permettant d'obtenir toutes les caractéristiques que l'on souhaite pour le mélange final.

Un autre objectif de l'invention est d'utiliser les matières premières avec aussi peu de conditionnement préalable que possible, surtout pour les constituants utilisés en très grandes quantités comme les élastomères de base et les charges renforçantes. L'invention a donc pour but de réaliser un appareil de mélangeage dans lequel on puisse introduire, d'une façon aussi simple que possible, lesdits constituants spécifiquement visés ci-dessus, sans aucun dosage préalable, et qui puisse traiter ces constituants de façon totalement autonome et en continu pour obtenir la composition souhaitée.

Un autre objectif de l'invention est d'améliorer l'homogénéïté des compositions de caoutchouc préparées, et la constance de celle-ci dans le temps, tout en diminuant le coût de fabrication.

Selon l'invention, le procédé de préparation en continu d'une composition de caoutchouc consiste à utiliser au moins une chambre de mélangeage constituée par un stator dans lequel tourne au moins un rotor, dont la rotation assure à la fois la propulsion d'amont vers l'aval (dans la direction générale de l'axe du ou des rotors) des constituants de la composition et leur mélangeage progressif ; il consiste à doser et à introduire en continu de façon positive le ou les élastomères de base du mélange en phase pâteuse, à doser et à introduire en continu tous les autres constituants de la composition, à faire avancer dans la chambre de mélangeage les constituants qui y ont été introduits le long de zones de propulsion et de mélangeage, en s'assurant que le taux de remplissage de la chambre de mélangeage dans certaines zones de mélangeage au moins soit inférieur à 1.

Lorsque le volume de la chambre de mélangeage est totalement occupé par les constituants à mélanger, on dit par convention que le taux de remplissage de la chambre de mélangeage vaut 1. Lorsque le volume des constituants mélangés est inférieur au volume disponible dans la chambre de mélangeage, ce qui est typiquement le cas pour le fonctionnement des mélangeurs internes, on dit alors que le taux de remplissage est inférieur à 1.

On a constaté en effet que, même pour un mélangeur en continu, il est souhaitable qu'il subsiste du vide à l'intérieur de la chambre de mélangeage pour que l'action de dispersion et d'homogénéisation du mélange soit parfaite, c'est-à-dire qu'il y ait certaines zones au moins de la chambre de mélangeage dans lesquelles le taux de remplissage est inférieur à un. Cela dépend de la nature des constituants à mélanger et se constate par une observation expérimentale. Dans l'état de la technique antérieure, l'importance de ce paramètre semble n'avoir pas été suffisamment comprise. Lorsque l'on utilisait des vis tournant dans des fourreaux pour mélanger, on laissait l'espace disponible entre vis et fourreau se remplir, ou on ne prenait aucune mesure particulière pour maîtriser ce paramètre.

Il est possible de réaliser, à l'intérieur d'une même chambre de mélangeage, des zones qui soient différentes les unes des autres, en choisissant des formes d'outils différents, c'est-à-dire en choisissant l'allure de la surface du rotor et de la surface intérieure du stator.

Ce sont ces formes d'outils différentes qui vont assurer que, compte tenu du débit à un point donné de la chambre de mélangeage, qui lui dépend du débit délivré par les organes de dosage et d'introduction en amont, le taux de remplissage soit inférieur à un, ou atteigne un. Autrement dit, il existe dans la chambre de mélangeage des zones propulsives et des zones de compression de la matière -c'est à dire des zones dans lesquelles l'action de propulsion du mélange est plus faible- de sorte que la chambre de mélangeage, le long de ces zones, tend à se remplir et à rester remplie.

En choisissant les formes d'outils, on assure le transport de la matière tout le long de la chambre de mélangeage, tout en contrôlant le taux de remplissage de celle-ci. On peut également agir sur le taux de remplissage de la chambre en agissant sur la température de paroi de la chambre. Cela modifie le collant du caoutchouc sur le métal.

Afin d'avoir l'assurance que les constituants de la formule sont bien introduits dans le mélangeur en quantités précises et régulières, il est préférable que la plupart de ceux-ci soient introduits de façon positive et certaine à l'intérieur de la chambre. C'est pourquoi on évite l'incorporation gravitaire, principalement dans le cas où une fraction des constituants pourrait ne pas rejoindre l'intérieur de la chambre. Afin de garantir par un contrôle du processus de mélangeange que tous les constituants prévus font effectivement partie de la composition fabriquée, il est souhaitable que, dès après le dosage, les constituants restent emprisonnés dans une enceinte confinée, par exemple une canalisation, jusqu'à ce qu'ils rejoignent la chambre de mélangeage. Le pompage volumétrique se prête particulièrement bien à une introduction forcée des constituants.

On a constaté que le pompage volumétrique permet par ailleurs de plastifier suffisamment les élastomères. Ceux-ci se trouvent ainsi introduits à chaud (typiquement à une température supérieure à 40°C) dans la chambre de mélangeage, dans un état qui permet l'incorporation rapide du noir, ou d'autres charges en poudre.

Pour obtenir un dosage rigoureusement précis des différents constituants du mélange de caoutchouc, il peut, selon les élastomères et/ou charges et/ou additifs utilisés, être souhaitable que là où l'on ajoute des constituants en aval d'une première zone de mélangeage, le taux de remplissage à l'intérieur de la chambre de mélangeage vaille 1, car sinon le débit dans la chambre risque d'être variable et les proportions de constituants ne seraient pas respectées. En alternative, ou en supplément pour mieux assurer un dosage précis, il peut être judicieux de garantir le débit à cet endroit en effectuant une reprise volumétrique du débit de la matière parvenue juste avant ce point d'introduction. On entend par "reprise volumétrique" un nouveau dosage volumétrique de la quantité de matière mélangée.

Mais on a observé des cas où l'on obtient plus facilement une grande stabilité du débit, avec un taux de remplissage de la chambre en permanence inférieur à 1, voire même très inférieur à 1. Cela permet d'éviter de recompacter la matière avant l'ajout d'un constituant supplémentaire.

La conception du mélangeage en continu proposé par la présente invention permet de concilier ces impératifs contradictoires (respect rigoureux et constant de la formule du mélange, donc des proportions relatives de chaque constituant, et taux inférieur à 1 propice à un bon mélangeage).

Selon un autre aspect de l'invention, après dosage des ou de certains des constituants, on crée du vide à l'intérieur de la chambre de mélangeage en accélérant le transport des constituants ou en augmentant la section de passage, puis on diminue l'effet de propulsion provoqué par la rotation du rotor, en changeant la forme du rotor et/ou du stator, ou en diminuant la section de passage, ou en agissant sur la température de paroi pour introduire d'autres constituants, selon la composition de caoutchouc à fabriquer. Notons ici que l'on entend par "vide" le fait que le volume de la chambre de mélangeage n'est pas totalement occupé par les constituants injectés, ce qui n'a rien à voir avec l'aspiration qu'il peut être souhaitable de prévoir en plusieurs endroits le long de la chambre de mélangeage pour dégazer, comme bien connu en soi.

Ainsi, selon une variante très intéressante du procédé de mélangeage selon l'invention, au moins une partie des élastomères de base et les charges renforçantes sont introduites dans une zone amont de la chambre, puis sont mélangées dans une première zone de mélangeage située juste en aval, puis parviennent à un point d'introduction où l'on introduit les autres constituants, l'ensemble étant mélangé dans une seconde zone de mélangeage. On peut soit introduire la totalité des élastomères de base au point amont de la chambre de mélangeage, soit n'en introduire qu'une partie et introduire l'autre partie d'un ou des élastomères de base plus loin, c'est à dire en un point décalé vers l'aval, par exemple avant la seconde zone de mélangeage.

L'invention propose aussi un appareil de mélangeage en continu tout particulièrement conçu pour mettre en oeuvre le procédé décrit, mais qui peut avoir des applications plus larges, par exemple si le niveau de précision attendu pour la composition et le niveau des performances exigées n'est pas aussi élevé.

Un appareil de mélangeage en continu pour préparer une composition de caoutchouc possède une chambre de mélangeage comportant au moins un rotor en rotation dans un stator et s'étendant entre une extrémité amont et une extrémité aval entre lesquelles la matière chemine progressivement, au moins un constituant de la composition étant introduit à ladite extrémité amont de la chambre de mélangeage, la composition de caoutchouc étant expulsée hors de l'extrémité aval ; il comporte des organes de dosage et d'introduction forcée du ou des élastomères de base, capables de refouler sous pression ledit ou lesdits élastomères de base pour les introduire dans la chambre de mélangeage, et comporte des organes de dosage et d'introduction des autres constituants, l'ensemble des organes de dosage et d'introduction débouchant dans la chambre de mélangeage en au moins deux positions séparées longitudinalement entre l'extrémité amont et l'extrémité aval.

L'appareil de mélangeage qui est décrit dans la suite comporte un seul rotor dans un stator. Cela signifie qu'il s'agit d'un mélangeur du type à une seule vis et non pas à deux vis parallèles, tournant dans la même chambre. Cela n'exclut pas que l'appareil comporte successivement deux ou plusieurs vis tournant chacune dans leur fourreau individuel ; mais dans une chambre donnée, il n'y a qu'une seule vis. Là encore, contrairement à ce qui apparaît dans l'état de la technique dans le domaine du mélangeage du caoutchouc où les mélangeurs continus récemment proposés utilisent deux rotors tournant dans un stator, de façon surprenante, on atteint les objectifs assignés à l'invention en utilisant un seul rotor sur la totalité de la longueur du ou des stators utilisés. C'est pourquoi l'invention s'étend aussi à un procédé de mélangeage dans lequel on utilise un seul rotor tournant dans un stator.

Le stator dans lequel tourne le rotor est un fourreau purement cylindrique, ou bien un fourreau dont la surface comporte aussi une forme spécifiquement dessinée pour contribuer à l'action de mélangeage et/ou de propulsion en coopération avec la forme du rotor.

Lorsqu'on examine la chambre de mélangeage, on distingue, le long de la chambre, des zones successives différentes selon l'allure de la surface du rotor et du stator : zones de mélangeage et zones de propulsion. Dans une zone donnée, c'est l'association de la forme de la paroi radialement intérieure du stator et de la forme de la surface radialement extérieure du rotor qui va caractériser la chambre de mélangeage. La forme de la surface radialement extérieure du rotor et de la surface radialement intérieure du stator assure un taux de remplissage de l'organe de mélangeage inférieur à un dans au moins certaines zones de la chambre de mélangeage.

L'action de mélangeage sera principalement due au désordre que l'on va réussir à provoquer dans l'écoulement de la matière par toute forme particulière que l'on va réaliser sur la surface du rotor et/ou sur la surface du stator : cavité, obstacle, laminage de la matière entre les sommets de filets disposés sur le rotor et/ou le stator, et la paroi opposée, cisaillement entre des obstacles fixes et des obstacles mobiles. L'entrefer, c'est-à-dire la distance entre les obstacles fixes (du stator) et les obstacles mobiles (du rotor), est un paramètre important permettant le réglage de l'action de mélangeage. Cela signifie que le concepteur du mélangeur peut agir sur le dimensionnement de cet entrefer pour agir sur la qualité du mélangeage en fonction des résultats observés.

La propulsion de la matière depuis l'amont vers l'aval de la chambre de mélangeage est principalement due à l'effet d'un filet : ce filet peut être indifféremment prévu sur l'arbre rotatif ou sur la surface interne du fourreau sur une ou sur les deux surfaces. Il peut s'agir d'un véritable filet comparable à celui d'une tige filetée pour recevoir un écrou, ou bien de l'effet "filet" résultant du vrillage combiné à une translation d'une ligne fermée pour définir géométriquement la paroi du stator ou du rotor.

La propulsion de la matière peut aussi être due au pompage volumétrique lors de l'introduction des constituants, ou à une reprise par pompage volumétique au cours du transport de la matière entre l'extrémité amont et l'extrémité aval de la chambre de mélangeage.

De préférence, juste avant d'introduire des constituants dans la chambre de mélangeage, la zone de celle-ci est une zone principalement de propulsion (action de mélangeage faible, ou nulle) constituée par exemple par un fourreau cylindrique lisse, et un rotor comportant un filet d'épaisseur constante, s'étendant perpendiculairement à l'axe du rotor.

De préférence, l'appareil de mélangeage comporte, pour un élastomère de base, une pompe volumétrique dans l'organe de dosage et d'introduction forcée. De façon avantageuse, tous les élastomères de base sont introduits chacun de la même façon. Il est très avantageux que la ou les pompes volumétriques pour élastomère soient alimentées par un organe de plastification et de gavage. Avec une telle machine, dans le cas où les élastomères alimentant la machine sont conditionnés en granulés, il n'est pas nécessaire de les recouvrir d'un anticollant.

Alors que l'état de la technique propose en général de doser quasiment tous les constituants par pesées, il est proposé d'utiliser de préférence le dosage par pompage volumétrique pour la plupart des constituants et de préférence tous, y compris ceux se présentant sous forme pulvérulente, et en tout cas y compris les élastomères de base.

Malgré tout, certains constituants peuvent être difficiles à doser volumétriquement et l'on peut être contraint à les doser par pesées. Selon l'invention, il est préférable d'assurer une introduction forcée de tous les constituants, c'est-à-dire de ne pas se reposer sur une incorporation par la gravité ; il est nécessaire, après dosage d'une certaine quantité, d'introduire celle-ci de façon positive et certaine à l'intérieur de la chambre de mélangeage. En utilisant des pompes volumétriques, il n'est pas nécessaire de faire dépendre le refoulement des constituants à l'intérieur de la chambre de mélangeage d'un paramètre, relevé par exemple à l'intérieur de celle-ci, comme par exemple la pression ou la température.

Afin de pouvoir garantir un respect rigoureux de tolérances étroites dans la formule donnant la composition de caoutchouc préparée, il est souhaitable que le taux de remplissage soit de 1 aux endroits où les organes de dosage et d'introduction forcée introduisent les constituants dans la chambre de mélangeage, sauf bien entendu pour le constituant introduit en premier lieu où la maîtrise du débit ne dépend que de la précision de l'organe de dosage et d'introduction lui-même. En revanche, en aval, introduire les constituants dans une zone où le taux de remplissage vaut 1 est favorable pour garantir que les proportions relatives des constituants sont rigoureusement respectées. En tout cas, en aval d'une première zone de mélangeage, pour garantir le respect de tolérances étroites pour la formule de la composition, il convient d'introduire d'autres constituants dans une zone où le taux de remplissage vaut 1 et/ou de prévoir une reprise de la totalité du débit par pompe volumétrique.

Si l'on introduit les constituants suivant le premier dans un endroit où le taux de remplissage est inférieur à 1, alors le respect rigoureux de la formule du mélange impose une grande stabilité du débit à l'intérieur de la chambre de mélange, afin que celui-ci soit en tous points constant et identique.

Les figures suivantes et la description qui s'y rapportent permettent de bien comprendre l'invention et d'en saisir tous les avantages :
La figure 1 est une vue en élévation d'un appareil de mélangeage selon l'invention, comportant des écorchés.
La figure 2 est une vue de côté du même appareil de mélangeage.
La figure 3 est une vue en plan du même appareil de mélangeage, comportant des écorchés.
La figure 4 est une coupe selon IV IV à la figure 3.
La figure 5 illustre une variante de réalisation.
La figure 6 montre des résultats comparatifs.

L'appareil de mélangeage que l'on aperçoit aux différentes figures comporte une chambre 11 de mélangeage à l'intérieur de laquelle tourne un rotor 2. Le côté amont de la chambre de mélangeage est repéré par la référence 12 et le côté aval par la référence 13.

D'un côté de la machine, on voit deux trémies 5 dans lesquelles on introduit les élastomères de base constituant le mélange de caoutchouc. Ces trémies sont capables de contenir au moins un pain d'élastomère tel qu'il se présente usuellement lors de la livraison aux industries de transformation du caoutchouc. Bien entendu, on peut aussi introduire le ou les élastomères dans la trémie sous forme déchiquetée. Un pilon 51 peut coulisser verticalement à l'intérieur de chaque trémie 5, depuis une position élevée, où il sort de la trémie 5, jusqu'à une position basse où il rejoint le fond de la trémie 5. Celle-ci communique avec une enceinte 52 dans laquelle tourne un couteau 53, vrillé en hélice. Ce couteau 53 constitue un moyen de déchiquetage des élastomères prélevant des copeaux sur le ou les pains d'élastomère disposés dans la trémie.

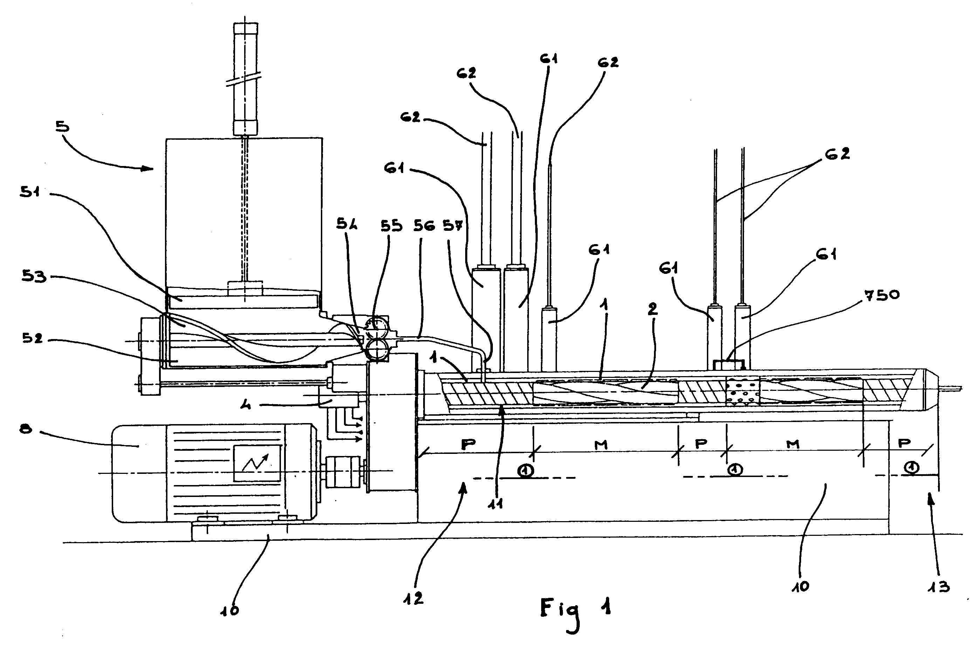

Ensuite, par un moyen mécanique assurant un transfert des granulés ou copeaux, on gave une pompe volumétrique. On voit dans cet exemple que le pas que fait l'hélice formant le couteau 53 diminue progressivement en 54 pour, à une action de déchiquetage qui ne nécessite pas la courbure en hélice, ajouter un transfert des copeaux et une action de plastification de plus en plus intense au fur et à mesure où l'on se déplace vers la droite à la figure 1. On assure ainsi le gavage d'une pompe à engrenage 55.

Les pompes à engrenage 55, qui sont volumétriques, sont branchées à des canalisations 56 qui se rassemblent en une seule canalisation 57 pour rejoindre la chambre de mélangeage.

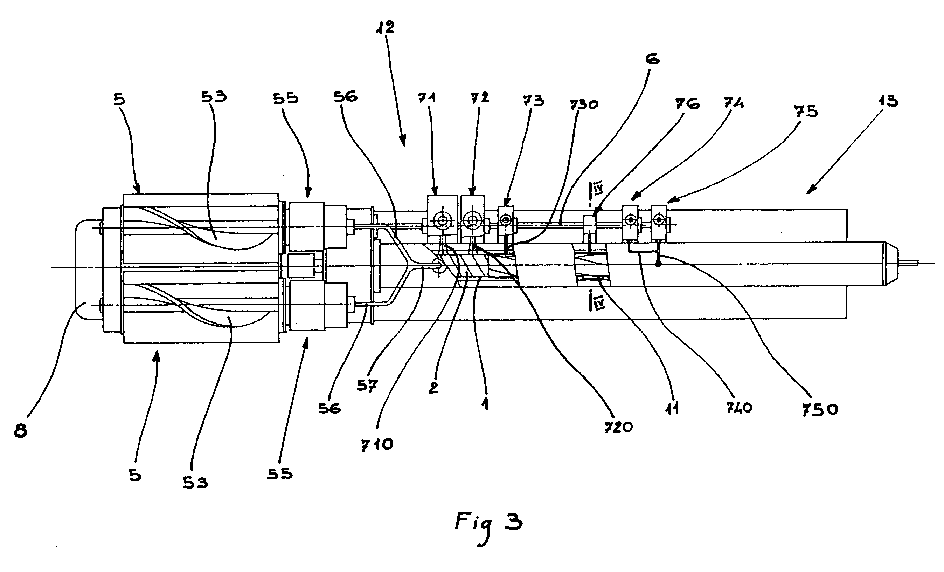

Les écorchés aux figures 1 et 3 permettent d'apercevoir l'intérieur de la chambre de mélangeage 11. Celle-ci est constituée par le volume disponible entre le rotor 2 et le stator 1.

Le long du rotor 2, on distingue trois zones dont l'action est essentiellement la propulsion des constituants du mélange (zones P), entre lesquelles on aperçoit deux zones distinctes dont l'action est essentiellement le mélangeage (zones M). L'introduction des élastomères de base se fait du côté amont 12 de la chambre de mélangeage dans une zone de propulsion P.

D'autres organes de dosage et d'introduction sont répartis le long de la chambre de mélangeage et permettent d'introduire les autres constituants de la composition finale à différents endroits le long du cheminement des constituants de base. De préférence, tous les constituants pâteux sont introduits avec des organes de dosage et d'introduction forcée, de préférence des pompes volumétriques. Les constituants pulvérulents sont de préférence introduits avec une pompe volumétrique, en amont de la première zone M. On peut par exemple utiliser celle décrite dans le brevet EP 0 465 981 ou bien une pompe volumétrique du type de celle décrite dans le brevet EP 0 465 980 dans la variante ayant un piston de refoulement. Les constituants liquides peuvent être introduits très facilement avec une pompe volumétrique pour liquide qui peut être du type à pistons ou de n'importe quel type capable d'assurer une bonne précision volumétrique comme par exemple une pompe à engrenages ou une pompe à palettes. Le dosage volumétrique des liquides ne pose aucun problème et les différents moyens sont bien connus dans l'état de la technique. Ils sont introduits au début de la première zone M.

De façon avantageuse, les anti-oxydants, les plastifiants, le soufre, les activateurs sont prémélangés, seuls ou avec une très faible quantité d'huile (quelques % de la quantité prévue par la formule de la composition de caoutchouc), par exemple très simplement dans une cuve dans laquelle tourne une hélice. Cette opération donne à ce mélange l'allure d'une pâte. Au besoin, ceux de ces produits qui sont en phase solide à la température ambiante sont d'abord réchauffés pour les liquéfier. Ce mélange pâteux, comme tout autre constituant pâteux éventuel, est de préférence introduit avec une pompe volumétrique (pompe à engrenages, ou à piston par exemple). Effectuer un prémélangeage ou plus exactement un regroupement de constituants est tout particulièrement avantageux lorsqu'il y a beaucoup de constituants utilisés chacuns en très faible quantité dans la formule du mélange considéré, c'est à dire utilisés chacun en proportion inférieure à 10 % du poids total d'élastomère. Cela conduit à diminuer le nombre d'organes de dosage sur l'appareil mélangeur. Ce prémélangeage peut être effectué en continu ou par charges successives. Il faut bien entendu tenir compte des éventuelles incompatibilités chimiques dans le choix des produits ainsi regroupés.

Dans l'exemple décrit, les organes de dosage et d'introduction 71 et 72 sont des pompes volumétriques pour produits pulvérulents. On aperçoit les cheminées de communication 710 et 720 entre ces pompes et la chambre de mélangeage. La pompe 73 permet un dosage volumétrique et une introduction sous pression, via le passage 730, de l'huile utilisée dans le mélange de caoutchouc.

Enfin, les pompes 74 et 75 sont utilisées pour introduire respectivement, via les canalisations 740 et 750, un accélérateur, et, ensemble, des antioxydants, plastifiants et du soufre qui ont été prémélangés. Les canalisations 740 et 750 se rejoignent en une seule (750) qui conduit les constituants à la chambre de mélangeage 11. Il est important que le débit massique de la seconde zone P soit égal à la somme des débits massiques de tous les organes de dosage et d'introduction situés en amont, car s'il était inférieur, alors la première zone M se remplirait progressivemnt en totalité (taux de remplissage de 1) et elle ne pourrait plus alors remplir son rôle de zone de mélangeage.

Même celles des pompes volumétriques qui par nature délivrent un débit pulsé autorisent un fonctionnement globalement continu de l'appareil mélangeur, si l'on choisit une cylindrée unitaire suffisamment faible par rapport au débit global et à la vitesse d'écoulement.

L'appareil est équipé d'au moins un dispositif de dégazage 76 implanté, comme on le voit à la figure 3, peu avant la pompe 74, c'est-à-dire dans une zone où le taux de remplissage est inférieur à 1. A la figure 1, les zones où le taux de remplissage vaut 1 sont repérées par des traits parallèles à l'axe de l'appareil, en regard desdites zones, identifiées par le chiffre 1 entouré d'un cercle.

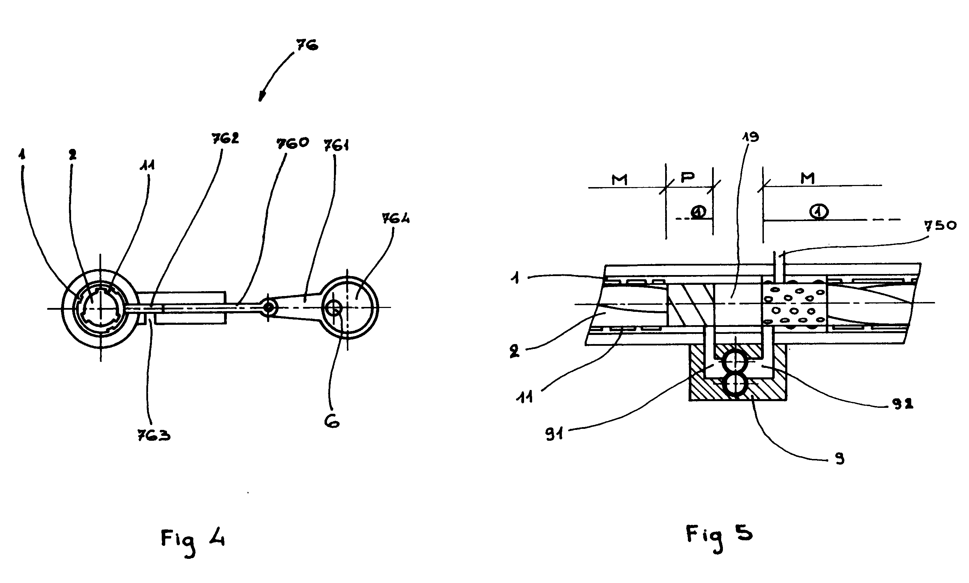

A la figure 4, on voit que le dispositif de dégazage 76 comporte une ouverture de mise à l'atmosphère 763, percée dans un tube 762 qui rejoint par ailleurs la chambre de mélangeage 11. Le but poursuivi est d'empêcher que le dégazage ne laisse s'échapper en même temps la matière contenue à l'intérieur de la chambre de mélangeage.

A cette fin, on prévoit un moyen qui, successivement, occulte puis découvre ladite ouverture 763, en répétant ce cycle en continu. L'air peut donc s'échapper un bref moment, sans que la matière n'ait le temps d'être entraînée hors de la chambre 11. C'est le rôle du piston 760, entraîné via une bielle 761 par un excentrique monté sur l'arbre 6. L'ensemble est réglé pour que, après avoir occulté l'ouverture 763, le piston 760 puisse repousser dans la chambre 11 la matière qui aurait pu commencer à pénétrer dans le tube 762.

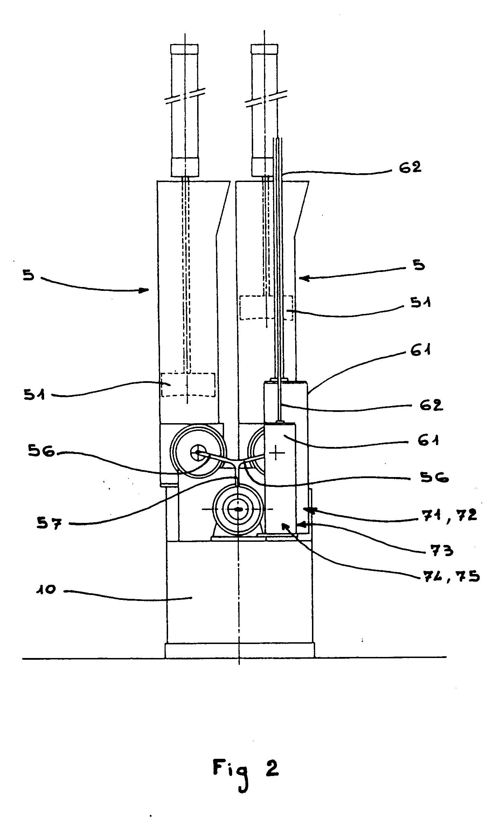

Par dessus les différentes pompes 71, 72, 73, 74, 75, on voit (figure 2), pour chaque constituant, une colonne dans laquelle il y a un réservoir tampon 61, surmonté d'un tuyau 62 d'alimentation. Les tuyaux 62 sont branchés à un réseau de distribution : tuyauterie, éventuellement régulée en température pour les liquides, acheminement par les systèmes bien connus pour les pulvérulents (par exemple transport pneumatique), ou tout autre système convenable. Un dispositif adéquat contrôle le niveau du constituant dans les réservoirs tampons 61 pour maintenir le remplissage de ceux-ci entre les niveaux mini et maxi prévus.

On voit (figure 1) que la chambre de mélange comporte, d'amont en aval, une zone où le taux de remplissage vaut 1 puis une zone dont le taux de remplissage est inférieur à 1. Ceci résulte du fait que l'on introduit des constituants par la canalisation 750, et que donc à cet endroit, pour garantir un parfait respect de la composition à réaliser, on assure une stabilisation du débit en atteignant un taux de remplissage de 1. Juste avant, on a donc prévu une zone de populsion P. Dès lors, l'appareil comporte une la chambre 11 comportant au moins une zone dont le taux de remplissage est inférieur à 1, située juste en aval d'une zone où le taux de remplissage vaut 1.

La construction de l'appareil du mélangeage est modulaire. On voit qu'il comporte dans la variante illustrant l'invention deux étages de mélangeage. Selon la difficulté qu'il y a à réaliser le mélangeage de caoutchouc, on peut utiliser un ou plusieurs étages de mélangeage qui tous seront constitués de la même façon : ils comprendront une zone de simple propulsion puis une ou plusieurs zones de mélangeage. Pour réaliser les différents éléments de mélangeage, on utilise un arbre porte-outils, sur lequel on enfile et on immobilise par clavette différents outils choisis en fonction des performances de mélangeage à obtenir.

On voit à la figure 1 que, pour toutes les zones P, le stator 1 est lisse, et le rotor comporte une simple vis propulsive, schématisée sur les dessins. On voit aussi que, pour la première zone M et une partie de la seconde zone M, le stator 1 comporte un filet à pas inverse par rapport au filet disposé sur 1 rotor en zones P, pour contribuer à la propulsion du mélange, et la surface du rotor est engendrée par une section tringulaire, vrillée en hélice. Enfin, on voit que, pour une petite partie de la seconde zone M, tant le rotor que le stator comportent des cavités du genre de celles décrites dans le brevet WO 83/03222 ou EP 48590.

Signalons cependant que les connaissances en matière de conception des formes des rotors et stators des appareils mélangeurs pour caoutchouc sont assez empiriques. Il faut procéder à des déterminations expérimentales. Quant aux formes de ces outils mélangeurs, la présente invention impose seulement de les choisir pour réaliser des zones de propulsion P et de mélangeage M, de façon à ce que l'on ait des zones où le taux de remplissage est bien inférieur à 1 et des zones distinctes de transfert de la matière, où le taux de remplissage peut valoir 1 (voir 1 entouré d'un cercle à la figure 1).

Un moyen très simple pour contrôler la valeur du taux de remplissage effectif de la chambre de mélangeage, dans les différentes zones de celle-ci, consiste à arrêter simultanément la rotation du rotor et le fonctionnement de tous les organes de dosage et d'introduction, puis à retirer le rotor hors du stator, ce qui entraîne la matière en place le long du rotor. On peut alors comparer les volumes de matière aux volumes théoriques aux différentes zones voulues, le volume théorique étant celui disponible entre stator et rotor. Une simple inspection visuelle du rotor permettra le plus souvent de voir immédiatement quelles sont les zones où le taux de remplissage est inférieur à 1.

Ce principe de construction modulaire autorise facilement une optimisation du mélangeur au type de mélange à réaliser. Il est cependant possible de concevoir un outil assez polyvalent, même dans le cas du mélangeur à un seul rotor.

Bien entendu, l'appareil de mélangeage comporte une régulation thermique par circulation de fluide à l'intérieur du rotor via le joint tournant 4, et par circulation de fluide dans le stator, voire même autour des canalisations 55 et 56 et autour de l'enceinte 52. Il convient de pouvoir réguler en plusieurs zones séparées, car les consignes de température à respecter dépendent de la viscosité optimale que l'on recherche pour le stade de mélangeage atteint, et aussi de la réactivité à la température des différents constituants. Par exemple, on ne doit pas incorporer un système de vulcanisation dans un mélange qui serait à une température supérieure à la température de vulcanisation. En outre, de la maîtrise de la température exacte de la paroi sélectivement aux différentes zones dépend la maîtrise de l'écoulement de la matière le long de la paroi et, au final, la qualité du mélange fabriqué.

L'appareil de mélangeage est animé en totalité par un seul moteur 8 que l'on aperçoit sur le côté gauche du bâti 10. Ce moteur entraîne en rotation le rotor 2, ainsi qu'un arbre 6 de commande sur lequel peuvent être embrayés ou débrayés les organes de dosage et d'introduction forcée. Chaque organe de dosage et d'introduction forcée comporte un réglage qui permet de faire varier la quantité dosée pour une même vitesse de l'arbre 6 de commande.

Pour réaliser une composition de caoutchouc, on choisit le cas échéant le type d'outil que l'on va monter sur l'arbre et sur le fourreau. Ensuite, pour obtenir la composition souhaitée, il faut régler les différents débits les uns par rapport aux autres au moyen des commandes de débit associées à chaque organe doseur. La réalisation par voie mécanique des réglages de débit peut a priori être considérée comme une contrainte. Cependant, cela offre une plus grande garantie de respect de la formule de la composition, et de sa constance dans le temps. Comme il ne faut effectuer ces réglages que lors d'un changement de composition, cela s'avère être une solution très intéressante. En cas de pompe à piston, on peut en ajuster la cylindrée par modification de la course. On peut aussi, pour tout type de pompe, faire varier la démultiplication installée entre l'arbre de commande 6 et chacune des pompes. Dans tous les cas, il n'y a pas de régulation individuelle sur les débits. Le mélangeur est animé en totalité par un seul moteur, qui fournit aussi bien le travail nécessaire au mélangeage, que le couple de rotation absorbé par tous les dispositifs doseurs.

Dans un autre choix de réalisation, chaque organe de dosage et d'introduction comporte son propre moteur, ou certains groupes d'organe comportent leur propre moteur, et le fonctionnement de l'ensemble des moteurs de l'appareil est contrôlé par un ordinateur en fonction des données de la composition à réaliser.

Un aspect intéressant du mélangeur en continu proposé par l'invention réside dans la très grande facilité avec laquelle on peut optimiser le taux de remplissage le long de son axe, pour tenir compte de la très grande diminution du volume occupé par les élastomères et les constituants pulvérulents, au fur et à mesure que les constituants pulvérulants sont introduits dans les élastomères. Cela s'obtient en jouant sur la section de passage de la matière, définie par la surface comprise entre rotor et stator sur une coupe perpendiculaire à l'axe du rotor, et/ou sur la vitesse de l'écoulement.

Au démarrage, on commence d'abord par mettre en rotation l'arbre 2 par le démarrage du moteur et ensuite on embraye les pompes volumétriques 55 assurant l'introduction des élastomères de base. Le plus simple est ensuite d'attendre le temps nécessaire pour que le ou les élastomères soient parvenus à l'extrémité aval de la chambre de mélangeage. On embraye alors simultanément tous les organes doseurs 71, 72, 73, 74 et 75. Puis après le temps de transit des matières à l'intérieur du mélangeur, on obtient la composition finale exacte. La perte de matière est infime au regard des quantités produites. Lors de l'arrêt de la fabrication du mélange, on stoppe l'action des organes doseurs, puis on peut laisser transiter un ou les élastomères de base qui peuvent avoir l'action d'une gomme de nettoyage. Ensuite on arrête la ou les pompes d'injection de ce ou ces élastomères, et l'on poursuit la rotation de l'arbre 2 pour assurer une vidange aussi complète que possible de la chambre de mélangeage.

Pendant le fonctionnement du mélangeur, chaque trémie 5 doit bien sûr toujours contenir l'élastomère de base voulu. Afin d'assurer une alimentation régulière de l'appareil, le pilon 51 appuie avec une force convenable sur l'élastomère que contient la trémie. Lorsque le pilon arrive à une position proche de la position basse, on peut le soulever et dégager complètement le dessus de la trémie pour pouvoir réintroduire un ou plusieurs pains. Ceci se fait en pratique sans aucune rupture de l'alimentation effective de la chambre de mélangeage. On peut aussi introduire dans une telle trémie des granulés (pellets) de caoutchouc, même sans qu'ils soient revêtus d'un anticollant.

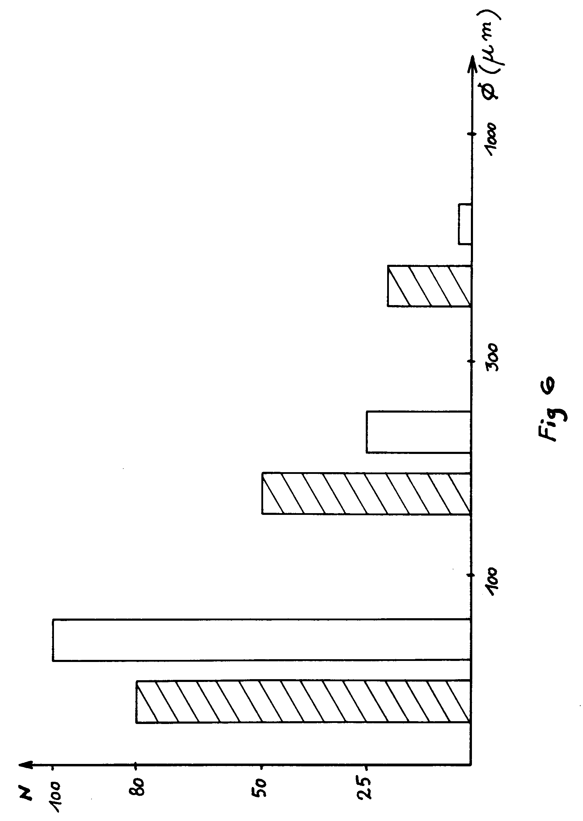

La figure 5 illustre partiellement une variante de l'appareil de mélangeage : une pompe volumétrique 9 est diposée le long de la chambre à au moins un point de prélèvement situé entre l'extrémité amont et l'extrémité aval, la totalité du débit au point de prélèvement passant par ladite pompe volumétrique. Cette pompe volumétrique 9 est installée de façon à effectuer une reprise volumétrique de tout le débit transitant dans l'appareil, juste avant d'ajouter un ou plusieurs autres constituants du mélange. Ce débit volumétrique doit être ajusté pour respecter la condition d'égalité des débits massiques exposée ci-dessus. On peut atteindre ce résultat par un dimensionnement judicieux de ladite pompe volumétrique 9. On peut aussi en piloter séparément la vitesse par une régulation construite à partir de deux capteurs de pression, l'un placé au début de la zone P, l'autre à la fin, juste avant le point de prélèvement, afin que la pompe volumétrique 9 ne se trouve pas sous gavée, ni que son débit insuffisant ne provoque un remplissage de la chambre de mélangeage dans la zone de mélangeage en amont. Cependant, il est important de n'introduire que de toutes petites variations de vitesse de la pompe volumétrique 9 autour de sa vitesse nominale.

Le rotor 2 comporte une portée lisse 19 ajustée avec un jeu fonctionnel sur le stator 1, de sorte que l'on réalise ainsi un palier étanche à la matière mélangée. Celle-ci transite par la tubulure 91, par la pompe volumétrique 9, à engrenage, puis par la tubulure de refoulement 92 qui la ramène dans la chambre de mélangeage 11, au-delà de la portée lisse 19. On aperçoit ensuite la canalisation 750 débouchant dans la chambre de mélangeage 11 au début de la seconde zone M. Elle correspond à un organe de dosage et d'introduction forcée situé juste en aval dudit point de prélèvement. La pompe volumétrique 9 à engrenage est entraînée par l'arbre 6 au moyen d'une prise de force non représentée.

L'invention peut être utilisée pour toutes les compositions de caoutchouc. On a évalué la qualité de la dispersion pour une composition pour bande de roulement de pneu, vulcanisable au soufre, à base de SBR et de polybutadiène, de noir de carbone, d'oxyde de zinc, d'huile et de cire. On observe au microscope optique les agglomérats présents dans une peau mince vulcanisée, réalisée avec cette composition. Ces agglomérats correspondent à des défauts de dispersion des charges. Sur le diagramme de la figure 6, on a représenté en abscisses, la taille des agglomérats, et en ordonnées leur nombre. On donne les résultats obtenus pour trois intervalles de taille d'agglomérats, identiques dans les deux essais. La composition réalisée sur un mélangeur interne donne les résultats représentés par les bâtonnets hachurés. On voit que les agglomérats subsistant après mélangeage selon l'invention sont de taille moyenne bien plus petite. Leur plus grand nombre révèle une meilleure action de dispersion.

En faisant référence au test Cabot (voir par exemple la norme ASTM D 2663), un mélange difficile à réaliser, ayant obtenu une note D3 après travail dans un mélangeur interne, obtient une note C2 en utilisant la présente invention. Un mélange courant, pour lequel on obtient la note C2 en utilisant un mélangeur interne, obtient la note B1 en utilisant la présente invention.

On voit que cet appareil très compact ne nécessite aucune préparation ni conditionnement ni dosage préalable des constituants les plus pondéraux, à savoir les élastomères et les charges renforçantes. Il est capable de recevoir les matières premières à l'état brut, et il délivre en sortie un mélange fini, respectant rigoureusement la composition formulée, et ses propriétés. Outre les avantages d'un procédé continu, la qualité des mélanges obtenus est au moins égale, voire meilleure à ce que l'on obtient sur mélangeur interne.

## Revendications

1. Appareil de mélangeage en continu pour préparer une composition de caoutchouc, comprenant une chambre de mélangeage (11) comportant au moins un rotor (1) en rotation dans un stator (2) et s'étendant entre une extrémité amont (12) et une extrémité aval (13) entre lesquelles la matière chemine progressivement pour délivrer la composition par ladite extrémité aval (13), comportant des organes de dosage et d'introduction forcée du ou des élastomères de base en phase pâteuse, refoulant ledit ou lesdits élastomères de base au travers d'une canalisation débouchant dans la chambre de mélangeage (11), et comportant des organes de dosage et d'introduction des autres constituants, l'ensemble des organes de dosage et d'introduction débouchant dans la chambre de mélangeage (11) en au moins deux positions séparées longitudinalement entre l'extrémité amont (12) et l'extrémité aval (13).

2. Appareil selon la revendication 1, caractérisé en ce qu'il comporte, pour tous les constituants, des organes de dosage et d'introduction forcée capables de refouler sous pression chaque constituant dans une chambre de mélangeage fermée (11).

3. Appareil selon la revendication 1 ou 2, caractérisé en ce que l'organe de dosage et d'introduction forcée utilisé pour introduire un élastomère de base de la composition de caoutchouc comporte une pompe volumétrique (55).

4. Appareil selon la revendication 1 ou 2, caractérisé en ce que tous les élastomères de base de la composition de caoutchouc sont introduits chacun par un organe de dosage et d'introduction forcée comportant une pompe volumétrique (55).

5. Appareil selon la revendication 3 ou 4, caractérisé en ce que la pompe volumétrique (55) est alimentée par un organe de plastification et de gavage (54).

6. Appareil selon la revendication 5, caractérisé en ce qu'il comporte une trémie (5) capable de contenir au moins un pain d'élastomère de base, un pilon (51) étant disposé dans la trémie (5) pour appuyer sur le ou les pains d'élastomère, le fond de la trémie communiquant avec une enceinte (52) dans laquelle agit un moyen de déchiquetage pour prélever des copeaux, qui sont ensuite soumis à l'action de l'organe de plastification et de gavage.

7. Appareil selon la revendication 6, caractérisé en ce que ledit moyen de déchiquetage est constitué par un couteau (53) vrillé en hélice, en rotation dans ladite enceinte (52).

8. Appareil selon la revendication 7, caractérisé en ce que ledit couteau (53) est vrillé en hélice de telle sorte que le pas de ladite hélice diminue progressivement, pour former d'une part une zone de déchiquetage, puis d'autre part une zone de plastification des copeaux.

9. Appareil selon l'une des revendications 1 à 8, caractérisé en ce que la chambre (11) comporte au moins une zone dont le taux de remplissage est inférieur à 1, située juste en aval d'une zone où le taux de remplissage vaut 1.

10. Appareil selon l'une des revendications 1 à 9, caractérisé en ce que tous les organes de dosage et d'introduction forcée utilisés pour tous les constituants pâteux sont des pompes volumétriques.

11. Appareil selon l'une des revendications 1 à 10, caractérisé en ce que tous les organes de dosage et d'introduction forcée utilisés pour tous les constituants pulvérulents sont des pompes volumétriques.

12. Appareil selon l'une des revendications 1 à 9, caractérisé en ce que tous les organes de dosage et d'introduction forcée de tous les constituants sont des pompes volumétriques.

13. Appareil selon l'une des revendications 1 à 12, caractérisé en ce qu'il comporte au moins deux zones de mélangeage (M) distinctes et en ce que les organes de dosage et d'introduction forcée situés en aval de la première zone de mélangeage (M) introduisent les constituants dans une zone de la chambre de mélangeage où le taux de remplissage vaut 1.

14. Appareil selon l'une des revendications 1 à 13 caractérisé en ce qu'il comporte un seul arbre de commande (6) des différents organes de dosage.

15. Appareil selon la revendication 14, caractérisé en ce qu'un mécanisme d'embrayage/débrayage est prévu entre les organes de dosage et d'introduction et ledit arbre de commande (6).

16. Appareil selon l'une des revendications 14 ou 15, caractérisé en ce que chaque organe de dosage et d'introduction comporte un moyen de réglage du débit permettant d'ajuster séparément les différents dosages pour s'adapter à différentes compositions de caoutchouc.

17. Appareil selon la revendication 16, caractérisé en ce que certains organes de dosage et d'introduction au moins sont des pompes à piston(s) et en ce que le réglage du débit est obtenu en faisant varier la cylindrée de la pompe.

18. Appareil selon la revendication 16, caractérisé en ce que le réglage du débit est obtenu en faisant varier la démultiplication.

19. Appareil selon l'une des revendications 1 à 13, caractérisé en ce que chaque organe de dosage et d'introduction comporte son propre moteur, et en ce que le fonctionement de l'ensemble des moteurs de l'appareil est contrôlé par un ordinateur en fonction des données de la composition à réaliser.

20. Appareil selon l'une des revendications 1 à 19, caractérisé en ce qu'une pompe de reprise volumétrique (9) est installée le long de la chambre (11) à au moins un point de prélèvement situé entre l'extrémité amont et l'extrémité aval, la totalité du débit au point de prélèvement passant par ladite pompe volumétrique (9).

21. Appareil selon la revendication 20, caractérisé en ce qu'il comporte au moins deux zones de mélangeage (M) distinctes et en ce que le point de prélèvement est situé entre deux zones de mélangeage (M), et avant un organe de dosage et d'introduction forcée.

22. Appareil selon l'une des revendications 1 à 21, caractérisé en ce que le stator (2) comporte un seul rotor (1) sur la totalité de sa longueur.

23. Appareil selon l'une des revendications 1 à 22, caractérisé en ce qu'il comporte au moins un dispositif de dégazage (76) implanté dans une zone où le taux de remplissage est inférieur à 1.

24. Appareil selon la revendication 23, caractérisé en ce que ledit dispositif (76) comporte une ouverture de mise à l'atmosphère (763) et un moyen qui, successivement, occulte puis découvre ladite ouverture en continu.

25. Procédé de préparation en continu d'une composition de caoutchouc, consistant à utiliser au moins une chambre de mélangeage constituée par un stator (1) dans lequel tourne au moins un rotor (2), dont la rotation assure la propulsion d'amont vers l'aval et le mélangeage des constituants, à doser et à introduire de façon forcée le ou les élastomères de la composition en phase pâteuse, à doser et à introduire tous les autres constituants de la composition, à faire avancer dans la chambre de mélangeage les constituants qui y sont introduits le long de zones de propulsion (P) et de mélangeage (M), le taux de remplissage de la chambre de mélangeage dans certaines zones de mélangeage (M) au moins étant inférieur à 1.

26. Procédé selon la revendication 25, caractérisé en ce que les élastomères sont introduits dans la chambre de mélangeage à une température supérieure à 40°C.

27. Procédé de préparation selon l'une des revendications 25 ou 26, caractérisé en ce que la plupart des constituants sont introduits de façon positive à l'intérieur de la chambre de mélangeage.

28. Procédé de préparation selon l'une des revendications 25 ou 26, caractérisé en ce que la plupart des constituants sont dosés et introduits en force par pompage volumétrique.

29. Procédé selon l'une des revendications 25 à 28, caractérisé en ce qu'une partie au moins des élastomères de base et les charges renforçantes sont introduites dans une zone amont de la chambre, et sont mélangées dans une première zone de mélangeage puis parviennent à un point d'introduction où l'on introduit les autres constituants, l'ensemble étant mélangé dans une seconde zone de mélangeage.

30. Procédé selon la revendication 29, caractérisé en ce que, entre la première zone de mélangeage et le point d'introduction, on effectue une reprise volumétrique du débit de matière traversant la chambre.

31. Procédé selon l'une des revendications 29 ou 30, caractérisé en ce que, entre la première zone de mélangeage et le point d'introduction, on assure un taux de remplissage de la chambre valant 1.

32. Procédé de mélangeage selon l'une des revendications 25 à 31, dans lequel on utilise un seul rotor tournant dans un stator.

33. Procédé selon l'une des revendications 25 à 32, utilisé pour préparer un mélange de caoutchouc dont la formule comporte plusieurs constituants intervenant chacun en proportion inférieure à 10 % du poids total d'élastomère, consistant à effectuer au moins un prémélangeage d'au moins certains desdits constituants de telle sorte que l'on obtienne une pâte, qui est par la suite introduite dans ladite chambre de mélangeage en quantité voulue avec les autres constituants.

34. Procédé selon la revendication 33, utilisé pour préparer un mélange dont la formule comporte de l'huile, caratérisé en ce qu'une fraction de la quantité d'huile est utilisée pour effectuer le prémélangeage.

35. Procédé selon l'une des revendications 33 ou 34, caratérisé en ce que ceux desdits constituants se présentant en phase solide à la température ambiante sont réchauffés jusqu'à ce qu'ils passent en phase liquide avant d'effectuer le prémélangeage.

36. Appareil selon l'une des revendications 1 à 24, caractérisé en ce que ladite extrémité amont (12) est destinée à recevoir au moins en partie au moins un élastomère de base de la composition.

37. Appareil selon l'une des revendications 1 à 24 ou 36, dans lequel le rotor comporte un arbre porte-outils, sur lequel on enfile et on immobilise par clavette différents outils choisis en fonction des performances de mélangeage à obtenir.

## Claims

1. A continuous mixing apparatus for preparing a rubber composition, having a mixing chamber (11) comprising at least one rotor (1) rotating within a stator (2) and extending between an upstream end (12) and a downstream end (13) between which the material moves progressively in order to deliver the composition from said downstream end (13), comprising metering and forced introduction members for the base elastomer or elastomers in pasty phase, delivering said base elastomer or elastomers through a pipe opening into the mixing chamber (11), and comprising metering and introduction means for the other components, all the metering and introduction means opening into the mixing chamber (11) in at least two positions spaced apart longitudinally between the upstream end (12) and the downstream end (13).

2. An apparatus according to Claim 1, characterised in that it comprises, for all the components, metering and forced introduction members capable of delivering each component under pressure into a closed mixing chamber (11).

3. An apparatus according to Claim 1 or 2, characterised in that the metering and forced introduction member used to introduce a base elastomer of the rubber composition comprises a volumetric pump (55).

4. An apparatus according to Claim 1 or 2, characterised in that each of the base elastomers of the rubber composition is introduced by a metering and forced introduction member comprising a volumetric pump (55).

5. An apparatus according to Claim 3 or 4, characterised in that the volumetric pump (55) is fed by a plasticising and stuffing member (54).

6. An apparatus according to Claim 5, characterised in that it comprises a hopper (5) capable of containing at least one base elastomer slab, a ram (51) being arranged in the hopper (5) to press on the elastomer slab or slabs, the bottom of the hopper communicating with an enclosure (52) in which a shredding means acts in order to remove chips which are then subjected to the action of the plasticising and stuffing member.

7. An apparatus according to Claim 6, characterised in that said shredding means is formed of a helically twisted knife (53) in rotation in said enclosure (52).

8. An apparatus according to Claim 7, characterised in that said knife (53) is helically twisted in such a manner that the pitch of said helix decreases progressively in order to form on the one hand a shredding zone and then on the other hand a chip plasticising zone.

9. An apparatus according to any of Claims 1 to 8, characterised in that the chamber (11) comprises at least one zone the filling rate of which is less than 1, located just downstream of a zone in which the filling rate is equal to 1.

10. An apparatus according to any of Claims 1 to 9, characterised in that all the metering and forced introduction members used for all the paste components are volumetric pumps.

11. An apparatus according to any of Claims 1 to 10, characterised in that all the metering and forced introduction means used for all the powdered components are volumetric pumps.

12. An apparatus according to any of Claims 1 to 9, characterised in that all the metering and forced introduction means of all the components are volumetric pumps.

13. An apparatus according to any of Claims 1 to 12, characterised in that it comprises at least two separate mixing zones (M) and in that the metering and forced introduction members located downstream of the first mixing zone (M) introduce the components into a zone of the mixing chamber where the filling rate is equal to 1.

14. An apparatus according to any of Claims 1 to 13, characterised in that it comprises a single drive shaft (6) for the various metering members.

15. An apparatus according to Claim 14, characterised in that an engagement/disengagement mechanism is provided between the metering and introduction members and said drive shaft (6).

16. An apparatus according to one of Claims 14 or 15, characterised in that each metering and introduction member comprises a means for regulating the flow which makes it possible separately to adjust the different dosages in order to adapt them to different rubber compositions.

17. An apparatus according to Claim 16, characterised in that at least certain metering and introduction members are piston pumps and in that the adjustment of the flow is effected by varying the volumetric displacement of the pump.

18. An apparatus according to Claim 16, characterised in that the regulation of the flow is obtained by varying the step-down ratio.

19. An apparatus according to one of Claims 1 to 13, characterised in that each metering and introduction member comprises its own motor and in that the operation of all the motors of the apparatus is controlled by a computer as a function of the data of the composition to be produced.

20. An apparatus according to any of Claims 1 to 19, characterised in that a volumetric booster pump (9) is installed along the chamber (11) at at least one point of withdrawal located between the upstream end and the downstream end, the entire flow at the point of withdrawal passing through said volumetric pump (9).

21. An apparatus according to Claim 20, characterised in that it comprises at least two separate mixing zones (M) and in that the point of withdrawal is located between two mixing zones (M) and in front of a metering and forced introduction member.

22. An apparatus according to any of Claims 1 to 21, characterised in that the stator (2) comprises a single rotor (1) over its entire length.

23. An apparatus according to any of Claims 1 to 22, characterised in that it comprises at least one degasification device (76) implanted in a zone where the filling rate is less than 1.

24. An apparatus according to Claim 23, characterised in that said device (76) comprises an opening to the atmosphere (763) and a means which, in succession, closes and then opens said opening continuously.

25. A method of continuously preparing a rubber composition, consisting in using at least one mixing chamber formed by a stator (1) in which at least one rotor (2) rotates, the rotation of which ensures the propulsion from upstream to downstream and the mixing of the components, metering and introducing the elastomer or elastomers of the composition in the pasty phase in forced manner, metering and introducing all the other components of the composition, advancing the components introduced into the mixing chamber through the mixing chamber along propulsion (P) and mixing (M) zones, the filling rate of the mixing chamber in at least certain mixing zones (M) being less than 1.

26. A method according to Claim 25, characterised in that the elastomers are introduced into the mixing chamber at a temperature of more than 40°C.

27. A method of preparation according to one of Claims 25 or 26, characterised in that most of the components are introduced positively into the mixing chamber.

28. A method of preparation according to one of Claims 25 or 26, characterised in that most of the components are metered and introduced forcefully by volumetric pumping.

29. A method according to any of claims 25 to 28, characterised in that at least a part of the base elastomers and the reinforcing fillers are introduced into an upstream zone of the chamber and are mixed in a first mixing zone, and then arrive at a point of introduction where the other components are introduced, the mixture being mixed in a second mixing zone.

30. A method according to Claim 29, characterised in that between the first mixing zone and the point of introduction, volumetric boosting of the flow of material passing through the chamber is effected.

31. A method according to one of Claims 29 or 30, characterised in that between the first mixing zone and the point of introduction there is a filling rate of the chamber equal to 1.

32. A method of mixing according to any of Claims 25 to 31, in which a single rotor rotating in a stator is used.

33. A method according to any of Claims 25 to 32, used to prepare a rubber mix the formula of which comprises several components, each present in a proportion of less than 10% of the total weight of elastomer, consisting in effecting at least a premixing of at least some of said components so that a paste is obtained, which is then introduced into said mixing chamber in the desired amount together with the other components.

34. A method according to Claim 33, used to prepare a mix the formula of which contains oil, characterised in that a fraction of the amount of oil is used to effect the premixing.

35. A method according to one of Claims 33 or 34, characterised in that those of said components present in solid phase at room temperature are heated until they pass into liquid phase before effecting the premixing.

36. An apparatus according to one of Claims 1 to 24, characterised in that said upstream end (12) is intended to receive at least in part at least one base elastomer of the composition.

37. An apparatus according to one of Claims 1 to 24 or 36, in which the rotor comprises a tool-holder shaft on which different tools selected as a function of the mixing performances to be obtained are mounted and locked by keys.

## Patentansprüche

1. Vorrichtung zur kontinuierlichen Mischung zum Herstellen einer Gummizusammensetzung, mit einer Mischkammer (11), die mindestens einen Rotor (1) aufweist, der sich in einen Stator (2) dreht und sich zwischen einem flußaufwärts gelegenen Ende (12) und einem flußabwärts gelegenen Ende (13) erstreckt, zwischen welchen das Material fortlaufend voranschreitet, um die Zusammensetzung durch das genannte flußabwärts gelegene Ende (13) abzugeben, mit Organen zur Dosierung und zwangsweisen Einleitung des oder der Grundelastomere in pastenartigem Zustand, die das oder die genannten Grundelastomere über eine Leitung drücken, die in die Mischkammer (11) einmündet, und mit Organen zur Dosierung und Einleitung der anderen Anteile, wobei die Gesamtheit der Organe zur Dosierung und Einleitung in die Mischkammer (11) an mindestens zwei in Längsrichtung zwischen dem flußaufwärts gelegenen Ende (12) und dem flußabwärts gelegenen Ende (13) einmündet.

2. Vorrichtung nach Anspruch 1, dadurch gekennzeichnet, daß sie für alle Anteile Organe zur Dosierung und zwangsweisen Einleitung aufweist, die imstande sind, jeden Anteil in eine geschlossene Mischkammer (11) unter Druck hineinzudrücken.

3. Vorrichtung nach Anspruch 1 oder 2, dadurch gekennzeichnet, daß das Organ zur Dosierung und zwangsweisen Einleitung, das zum Einleiten eines Grundelastomers der Gummizusammensetzung verwendet wird, eine volumetrische Pumpe (55) aufweist.

4. Vorrichtung nach Anspruch 1 oder 2, dadurch gekennzeichnet, daß alle Grundelastomere der Gummizusammensetzung jeweils durch ein Organ zur Dosierung und zwangsweisen Einleitung eingeleitet werden, das eine volumetrische Pumpe (55) aufweist.

5. Vorrichtung nach Anspruch 3 oder 4, dadurch gekennzeichnet, daß die volumetrische Pumpe (55) durch ein Plastifizierungs- und Stopforgan (54) gespeist ist.

6. Vorrichtung nach Anspruch 5, dadurch gekennzeichnet, daß sie einen Bunker (5) aufweist, der imstande ist, zumindest einen Grundelastomerkuchen zu enthalten, und einen Stempel (51), der im Bunker (5) angeordnet ist, um auf den oder die Elastomerkuchen einzuwirken, wobei der Boden des Bunkers mit einer Umhüllung (52) zusammenwirkt, in welcher ein Zerkleinerungsmittel wirksam ist, um Schnitzel zu entnehmen, die nachfolgend der Wirkung des Plastifizierungs- und Stopforganes unterzogen werden.

7. Vorrichtung nach Anspruch 6, dadurch gekennzeichnet, daß das Zerkleinerungsmittel von einem Messer (53) gebildet ist, das wendelförmig verwunden ist und zur Drehung in der genannten Umhüllung (52) angeordnet ist.

8. Vorrichtung nach Anspruch 7, dadurch gekennzeichnet, daß das genannte Messer (53) derart wendelförmig verwunden ist, daß die Ganghöhe des genannten Wendels sich fortlaufend verringert, um einerseits einen Zerkleinerungsbereich und dann andererseits einen Bereich zur Plastifizierung der Schnitzel zu bilden.

9. Vorrichtung nach einem der Ansprüche 1 bis 8, dadurch gekennzeichnet, daß die Kammer (11) mindestens einen Bereich aufweist, dessen Füllungsgrad kleiner ist als 1, und der unmittelbar hinter einem Bereich gelegen ist, in dem der Füllungsgrad 1 beträgt.

10. Vorrichtung nach einem der Ansprüche 1 bis 9, dadurch gekennzeichnet, daß alle Organe zur Dosierung und zwangsweisen Einleitung, die für alle pastenartigen Anteile verwendet sind, volumetrische Pumpen sind.

11. Vorrichtung nach einem der Ansprüche 1 bis 10, dadurch gekennzeichnet, daß alle Organe zur Dosierung und zwangsweisen Einleitung, die für die pulverigen Anteile benutzt werden, volumetrische Pumpen sind.

12. Vorrichtung nach einem der Ansprüche 1 bis 9, dadurch gekennzeichnet, daß alle Organe zur Dosierung und zwangsweisen Einleitung aller Bestandteile volumetrische Pumpen sind.

13. Vorrichtung nach einem der Ansprüche 1 bis 12, dadurch gekennzeichnet, daß sie mindestens zwei unterschiedliche Mischbereiche (M) aufweist, und daß die Organe zur Dosierung und zwangsweisen Einleitung, die vor dem ersten Mischbereich (M) gelegen sind, die Anteile in einem Bereich der Mischkammer einleiten, in dem der Füllungsgrad 1 beträgt.

14. Vorrichtung nach einem der Ansprüche 1 bis 13, dadurch gekennzeichnet, daß sie eine einzige Steuerwelle (6) für die verschiedenen Organe zur Dosierung aufweist.

15. Vorrichtung nach Anspruch 14, dadurch gekennzeichnet, daß ein Einkuppelungs-/Auskuppelungsmechanismus zwischen den Organen zur Dosierung und Einleitung und der genannten Steuerwelle (6) vorgesehen ist.

16. Vorrichtung nach einem der Ansprüche 14 oder 15, dadurch gekennzeichnet, daß jedes Organ zur Dosierung und Einleitung ein Mittel zum Regulierung des Durchsatzes aufweist, das es gestattet, getrennt die unterschiedlichen Dosierungen einzustellen, damit sie sich an die unterschiedlichen Gummizusammensetzungen anpassen können.

17. Vorrichtung nach Anspruch 16, dadurch gekennzeichnet, daß mindestens bestimmte Organe zur Dosierung und Einleitung Kolbenpumpen sind, und daS die Durchsatzregulierung dadurch erzielt wird, daß man den Hub der Pumpe veränderlich macht.

18. Vorrichtung nach Anspruch 16, dadurch gekennzeichnet, daß die Regulierung des Durchsatzes dadurch erzielt wird, daß man die Untersetzung veränderlich macht.

19. Vorrichtung nach einem der Ansprüche 1 bis 13, dadurch gekennzeichnet, daß jedes Organ zur Dosierung und Einleitung seinen eigenen Motor aufweist, und daß der Betrieb der Gesamtheit der Motoren der Vorrichtung von einem Regler in Funktion der Gegebenheiten der herzustellenden Zusammensetzung gesteuert wird.

20. Vorrichtung nach einem der Ansprüche 1 bis 19, dadurch gekennzeichnet, daß eine volumetrische Neuförderungspumpe (9) längs der Kammer (11) an mindestens einem Entnahmepunkt angebracht ist, der zwischen dem flußaufwärts gelegenen Ende und dem flußabwärts gelegenen Ende gelegen ist, wobei die Gesamtheit des Durchsatzes am Entnahmepunkt durch die genannte volumetrische Pumpe (9) hindurchtritt.

21. Vorrichtung nach Anspruch 20, dadurch gekennzeichnet, daß sie mindestens zwei unterschiedliche Mischbereiche (M) aufweist, und daß der Entnahmepunkt zwischen den beiden Mischbereichen (M) und vor einem Organ zur Dosierung und zwangsweisen Einleitung angeordnet ist.

22. Vorrichtung nach einem der Ansprüche 1 bis 21, dadurch gekennzeichnet, daß der Stator (2) über die Gesamtheit seiner Länge nur einen einzigen Rotor (1) aufweist.

23. Vorrichtung nach einem der Ansprüche 1 bis 22, dadurch gekennzeichnet, daß sie mindestens eine Entgasungsvorrichtung (76) aufweist, die in einem Bereich eingesetzt ist, in dem der Füllungsgrad kleiner ist als 1.

24. Vorrichtung nach Anspruch 23, dadurch gekennzeichnet, daß die genannte Vorrichtung (76) eine Öffnung zur Abgabe an die Umgebungsluft (763) sowie ein Mittel aufweist, das ständig aufeinanderfolgend die genannte Öffnung verschließt und dann öffnet.

25. Verfahren zur kontinuierlichen Herstellung einer Gummizusammensetzung, das darin besteht, mindestens eine Mischkammer zu benutzen, die von einem Stator (1) gebildet ist, in welcher sich mindestens ein Rotor (2) dreht, dessen Drehung den Vorschub von flußaufwärts nach flußabwärts und die Vermischung der Anteile sicherstellt, das oder die Elastomere der Zusammensetzung in pastenartigem Zustand zu dosieren und zwangsweise einzuleiten, alle anderen Bestandteile der Zusammensetzung zu dosieren und einzuleiten, und in der Mischkammer die Anteile voranbewegen zu lassen, die dort längs Vorschubbereichen (P) und Mischbereichen (M) eingeleitet wurden, wobei der Füllungsgrad der Mischkammer mindestens in bestimmten Mischbereichen (M) kleiner ist als 1.

26. Verfahren nach Anspruch 25, dadurch gekennzeichnet, daß die Elastomere in die Mischkammer bei einer Temperatur eingeleitet werden, die größer ist als 40°C.

27. Verfahren zur Herstellung nach einem der Ansprüche 25 oder 26, dadurch gekennzeichnet, daß der größte Teil der Anteile zwangsweise in das Innere der Mischkammer eingeleitet wird.

28. Verfahren zur Herstellung nach einem der Ansprüche 25 oder 26, dadurch gekennzeichnet daß der größte Teil der Anteile durch volumetrisches Pumpen dosiert und zwangsweise eingeleitet wird.

29. Verfahren nach einem der Ansprüche 25 bis 28, dadurch gekennzeichnet, daß mindestens ein Teil der Grundelastomere und die verstärkenden Zuschlagstoffe in einem Bereich vor bzw. stromaufwärts von der Kammer eingeleitet werden, in einem ersten Mischbereich vermischt werden und dann zu einem Einleitungspunkt gelangen, wo man die anderen Anteile einleitet, wobei die Gesamtheit in einen zweiten Mischbereich vermischt wird.

30. Verfahren nach Anspruch 29, dadurch gekennzeichnet, daß man zwischen dem ersten Mischbereich und dem Einleitungspunkt eine erneute, volumetrische Förderung des Materialdurchsatzes bewirkt, der die Kammer durchläuft.

31. Verfahren nach einem der Ansprüche 29 oder 30, dadurch gekennzeichnet, daß man zwischen dem ersten Mischbereich und dem Einleitungspunkt einen Füllungsgrad der Kammer sicherstellt, der 1 beträgt.

32. Mischverfahren nach einem der Ansprüche 25 bis 31, worin man einen einzigen Rotor benutzt, der sich in einem Stator dreht.

33. Verfahren nach einem der Ansprüche 25 bis 32, verwendet zur Herstellung einer Gummimischung, deren Rezeptur mehrere Anteile aufweist, die jeweils in einem Verhältnisanteil auftreten, der kleiner ist als 10% des Gesamtelastomergewichts, das darin besteht, daß man mindestens eine Vormischung mindestens bestimmter der genannten Anteile derart vornimmt, daß man eine Paste erzielt, die nachfolgend in die genannte Mischkammer in der gewünschten Menge zusammen mit den anderen Anteilen eingeleitet wird.

34. Verfahren nach Anspruch 33, benutzt zum Herstellen einer Mischung, deren Rezeptur Öl enthält, dadurch gekennzeichnet, daß ein Bruchteil der Ölmenge benutzt wird, um die Vormischung zu bewirken.

35. Verfahren nach einem der Ansprüche 33 oder 34, dadurch gekennzeichnet, daß die der genannten Anteile, die sich bei Umgebungstemperatur in festem Zustand darbieten, erwärmt werden, bis sie in einen flüssigen Zustand übegehen, bevor man die Vormischung bewirkt.

36. Vorrichtung nach einem der Ansprüche 1 bis 24, dadurch gekennzeichnet, daß das flußaufwärts gelegene Ende (12) dazu bestimmt ist, mindestens einen Teil mindestens eines Grundelastomers der Zusammensetzung aufzunehmen.

37. Vorrichtung nach einem der Ansprüche 1 bis 24 oder 36, worin der Rotor eine Werkzeugträgerwelle aufweist, auf welcher man verschieden Werkzeuge aufreiht und festkeilt, die in Funktion der zu erreichenden Mischleistungen ausgewählt sind.
